Europäisches Patentamt

European Patent Office

Office européen des brevets

(11) Numéro de publication: **0 396 470**

**A1**

## (12) DEMANDE DE BREVET EUROPEEN

(21) Numéro de dépôt: **90401191.3**

(22) Date de dépôt: **03.05.90**

(51) Int. Cl.⁵: **A21B 5/08, A47J 37/04, A47J 37/12, A21B 3/04**

(30) Priorité: **03.05.89 FR 8905935**

(43) Date de publication de la demande:
**07.11.90 Bulletin 90/45**

(84) Etats contractants désignés:
**AT BE CH DE DK ES FR GB GR IT LI LU NL SE**

(71) Demandeur: **Julian, Yvon**
**Rue de la Boissière**
**F-27870 Vesly(FR)**

(72) Inventeur: **Julian, Yvon**
**Rue de la Boissière**
**F-27870 Vesly(FR)**

(74) Mandataire: **Rinuy, Santarelli**
**14, avenue de la Grande Armée**
**F-75017 Paris(FR)**

(54) **Procédé et dispositif de cuisson automatique de produits alimentaires.**

(57) Procédé de cuisson automatique de produits alimentaires comprenant successivement la précuisson desdits produits, leur grillage en surface, puis leur cuisson à coeur, lesdits produits étant contenus dans un panier ajouré (3), au moins pendant leur cuisson finale, caractérisé en ce qu'on réalise la précuisson en atmosphère gazeuse au moins partiellement humide sous l'action concomittante d'un rayonnement infra-rouge, on élimine ensuite au moins partiellement l'atmosphère gazeuse humide, puis on recouvre au moins partiellement les produits précuits avec des particules de matière grasse liquide finement divisée et on maintient le rayonnement infra-rouge pour réaliser à la fois le grillage superficiel et la cuisson finale à coeur desdits produits et en ce que au moins pendant la cuisson finale, on soumet lesdits produits à des mouvements de retournement au moins partiel sur eux-mêmes par rotation dudit panier (3) autour de son axe et que la paroi périphérique (43) possède la forme d'un ellipsoïde de révolution autour du grand axe horizontal, cette paroi périphérique ellipsoïdale comportant au moins une paire de zones médianes symétriques (44,45,44a,45a) enfoncées en direction du grand axe.

Fig-1

## Procédé et dispositif de cuisson automatique de produits alimentaires.

La présente invention concerne un procédé et un dispositif pour la cuisson automatique de produits alimentaires comprenant successivement la précuisson desdits produits, leur grillage en surface puis leur cuisson à coeur.

Le développement de la restauration rapide et l'utilisation de plus en plus fréquente de produits alimentaires précuits, surgelés ou congelés nécessitent la mise en oeuvre de procédés de cuisson ou de friture différents des procédés utilisés en cuisine traditionnelle.

Ainsi par exemple, pour préparer des produits frits à partir d'aliments précuits, il est recommandé de replonger les produits dans un bain d'huile pour parfaire leur cuisson et leur donner un aspect doré avant de les servir aux consommateurs.

Cependant, l'utilisation de bains d'huile présente toujours certains dangers tels que les risques de brûlures ou d'incendie.

Par ailleurs, l'immersion des produits dans des bains d'huile les imprègne d'une quantité très importante de matières grasses qui les rend indigestes.

De plus, l'huile se dégrade rapidement et la qualité recherchée des produits cuisinés nécessite le changement fréquent des huiles de bains, ce qui augmente le prix de revient desdits produits.

Il est également connu d'employer des produits précuits au moyen d'un bain d'huile et de leur faire subir immédiatement avant leur consommation une cuisson de finition en les soumettant à un rayonnement infra-rouge et en utilisant la pellicule d'huile restant à la surface des produits après la précuisson en bain d'huile.

Ce mode de cuisson réduit sensiblement l'apport en graisse sans pour autant permettre un contrôle exact de la quantité de graisse apportée aux aliments pendant la précuisson de ceux-ci.

La présente invention vise un procédé permettant de contrôler et de réduire l'apport en graisse lors de la cuisson pour obtenir des produits prêts à la consommation et contenant une quantité très faible de matière grasse.

La présente invention s'applique donc à un procédé de cuisson automatique de produits alimentaires comprenant successivement la précuisson desdits produits, leur grillage en surface, puis leur cuisson à coeur, lesdits produits étant contenus dans un panier ajouré, au moins pendant leur cuisson finale.

Conformément à l'invention, ce procédé est caractérisé en ce qu'on réalise la précuisson en atmosphère gazeuse au moins partiellement humide sous l'action concomittante d'un rayonnement infra-rouge, on élimine ensuite au moins partiellement l'atmosphère gazeuse humide, puis on recouvre au moins partiellement les produits précuits avec des particules de matière grasse liquide finement divisée et on maintient le rayonnement infra-rouge pour réaliser à la fois le grillage superficiel et la cuisson finale à coeur desdits produits et en ce que au moins pendant la cuisson finale, on soumet lesdits produits à des mouvements de retournement au moins partiel sur eux-mêmes par rotation dudit panier autour de son axe et que la paroi périphérique possède la forme d'un ellipsoïde de révolution autour du grand axe horizontal, cette paroi périphérique ellipsoïdale comportant au moins une paire de zones médianes symétriques enfoncées en direction du grand axe.

Selon une autre caractéristique de l'invention, on recouvre les produits précuits au moins partiellement et, de manière discontinue, avec des particules de matières grasse liquide finement divisée.

Selon encore une autre caractéristique du procédé de l'invention, lesdites particules de matière grasse liquide finement divisée sont déposées sur les produits précuits par pulvérisations successives de courte durée, les intervalles entre deux pulvérisations successives correspondant à au moins un retournement partiel des produits sur eux-mêmes.

Dans certains cas, il peut être avantageux de préchauffer une certaine quantité de matière grasse immédiatement avant de la pulvériser.

Toujours selon un mode de mise en oeuvre du procédé de l'invention, l'atmosphère gazeuse humide est constituée au moins partiellement de vapeur d'eau.

Selon une première variante, ladite atmosphère est tranquille et selon une autre variante, ladite atmosphère est à circulation forcée.

L'invention vise aussi un dispositif de cuisson automatique de produits alimentaires comprenant :
- une enceinte de chauffage ayant une ouverture obturable par un couvercle ou porte,
- un panier ajouré amovible disposé à l'intérieur de l'enceinte et destiné à contenir lesdits produits, et
- des résistances électriques à rayonnement infra-rouge,

caractérisé en ce que ledit panier est un tambour rotatif dont la paroi périphérique présente la forme d'un ellipsoïde de révolution autour du grand axe horizontal comprenant au moins une paire de zones médianes symétriques enfoncées en direction du grand axe, et dont chacune des extrémités latérales est munie d'un pivot coaxial à l'autre reçu chacun dans un palier fixé sur une face intérieure de l'enceinte, qu'au moins l'un des deux pivots est de forme annulaire et délimite un accès latéral et axial à l'intérieur du panier et au moins l'un des deux pivots est muni de moyens d'accouplement à un mécanisme d'entraînement rotatif comportant un moteur dont au moins l'arbre de sortie pénètre à l'intérieur de l'enceinte,

et en ce qu'il comporte en outre

- des moyens de production et de distribution de vapeur dont au moins une partie est prévue à l'intérieur de l'enceinte ,
- un filtre établissant une communication entre l'extérieur et l'intérieur de l'enceinte,
- des moyens de distribution de matière grasse liquide finement divisée dont au moins une partie débouche à l'intérieur du panier à travers le pivot annulaire , et
- des moyens de contrôle et de commande de la distribution de vapeur et de matière grasse prévus à l'extérieur de l'enceinte.

Selon une caractéristique du dispositif de l'invention, les moyens de production et de distribution de vapeur comprennent au moins une rampe de distribution d'eau, au moins une paroi d'évaporation amovible et au moins une résistance électrique disposée de façon sensiblement horizontale à l'intérieur de l'enceinte en étant au contact de la face arrière de ladite paroi d'évaporation.

Selon une variante de réalisation, lesdits moyens de production et de distribution de vapeur comprennent un générateur de vapeur disposé à l'extérieur de l'enceinte et au moins une rampe de distribution de vapeur, interne à l'enceinte.

Selon une autre caractéristique de l'invention, les moyens de distribution de matière grasse liquide finement divisée comprennent un réservoir de matière grasse disposé à l'extérieur de l'enceinte, au moins une buse de pulvérisation débouchant à l'intérieur du panier à travers le pivot annulaire et au moins un moyen de mise sous pression d'une quantité dosée de matière grasse pour l'expulser à travers ladite buse de pulvérisation.

Selon encore une autre caractéristique, le panier comporte une ouverture d'accès obturable.

Selon un autre aspect de l'invention, le dispositif comprend également des moyens de récupération des liquides résultant de la cuisson constitués d'un plat-tiroir amovible monté de façon coulissante dans la partie inférieure de l'enceinte de chauffage.

Le procédé et le dispositif de l'invention permettent de n'utiliser qu'une très faible quantité de matière grasse . Ainsi, les risques d'incendie ou de brûlures sont minimisés et les produits alimentaires ainsi préparés, outre leur aspect appétissant, contiennent beaucoup moins de matière grasse absorbée.

La présente invention sera mieux comprise à la lecture de la description qui va suivre accompagnée des dessins annexés sur lesquels :

- la figure 1 représente une vue en perspective du dispositif de cuisson selon l'invention ;
- la figure 2 représente une coupe verticale du panier de réception et de ses moyens de support, d'accouplement et d'entraînement à l'intérieur de l'enceinte du dispositif de cuisson suivant la ligne brisée II-II de la figure 3 ;
- la figure 3 est une vue en coupe verticale à travers le panier de réception suivant la ligne III-III de la figure 2 ;
- la figure 4 est une vue agrandie en coupe verticale d'un détail de la figure 2 ;
- la figure 5 est une vue latérale en élévation montrant un panier de réception à grande ouverture ;
- la figure 6 est une vue en perspective des moyens d'accouplement et d'entraînement du panier de réception ;
- la figure 7 est une vue schématique en coupe d'un générateur de vapeur d'eau ;
- les figures 8 à 10 sont des vues schématiques de plusieurs variantes des moyens générateurs de vapeur d'eau prévus à l'intérieur de l'enceinte de chauffage ;
- la figure 11 est une vue schématique d'un premier mode de réalisation des moyens de distribution de matière grasse liquide ;
- la figure 12 est une vue schématique d'un deuxième mode de réalisation des moyens de distibution de matière grasse liquide et ;
- les figures 13 et 14 montrent en coupe axiale deux variantes d'une buse de pulvérisation de la matière grasse liquide.

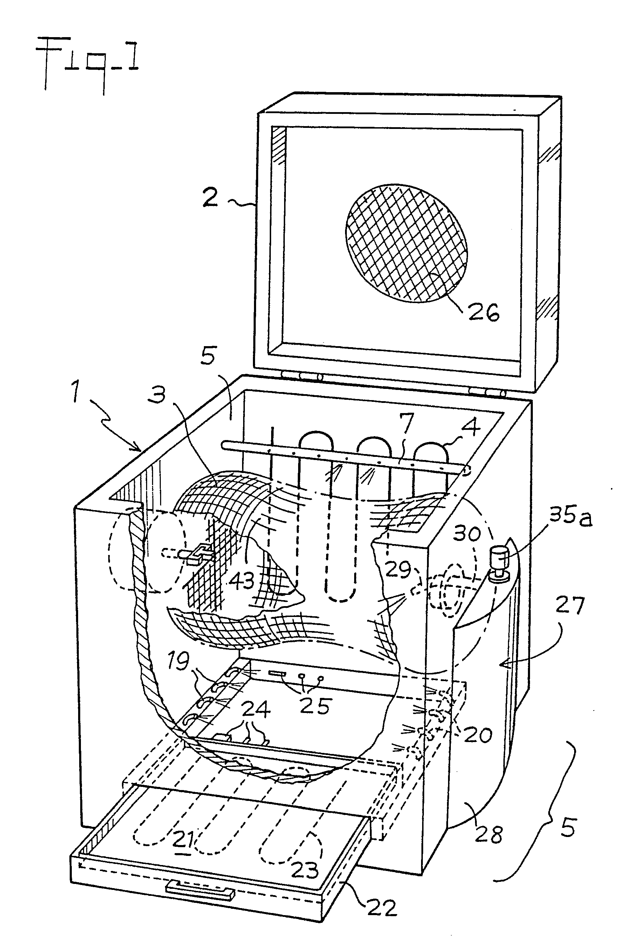

La figure 1 représente une vue générale du dispositif de cuisson selon l'invention. Ce dispositif comprend une enceinte de chauffage 1 ayant une ouverture obturable par un couvercle 2. On peut également concevoir un mode de réalisation dans lequel l'enceinte a une ouverture obturable par une porte latérale ou frontale. Les parois de cette enceinte 1 sont réalisées avec des matériaux résistant aux températures de cuisson et garantissant une isolation thermique convenable.

Le dispositif de cuisson comprend également un panier ajouré 3 dit de réception amovible disposé à l'intérieur de l'enceinte 1 et destiné à contenir les produits alimentaires, ainsi que des résistances électriques 4 à rayonnement infra-rouge disposées sur la face intérieure d'au moins une des parois de l'enceinte 1, notamment de la paroi arrière. Bien entendu, ces résistances électriques peuvent aussi être intégrées dans les parois de l'enceinte 1.

Le dispositif est aussi pourvu de moyens générateurs de vapeur d'eau désignés par la référence générale 5 et contribuant à la précuisson ou la cuisson partielle des produits en atmosphère gazeuse humide constituée au moins partiellement de vapeur d'eau, sous l'action concomitante d'un rayonnement infra-rouge. L'atmosphère gazeuse humide est soit stationnaire, c'est-à-dire tranquille, soit à circulation forcée ; dans ce dernier cas, un courant d'air chaud humide pulsé se déplace à l'intérieur de l'enceinte 1 en circuit fermé et est produit par un ventilateur non représenté.

Les moyens de production et de distribution de vapeur 5 sont au moins en partie prévus à l'intérieur de l'enceinte 1.

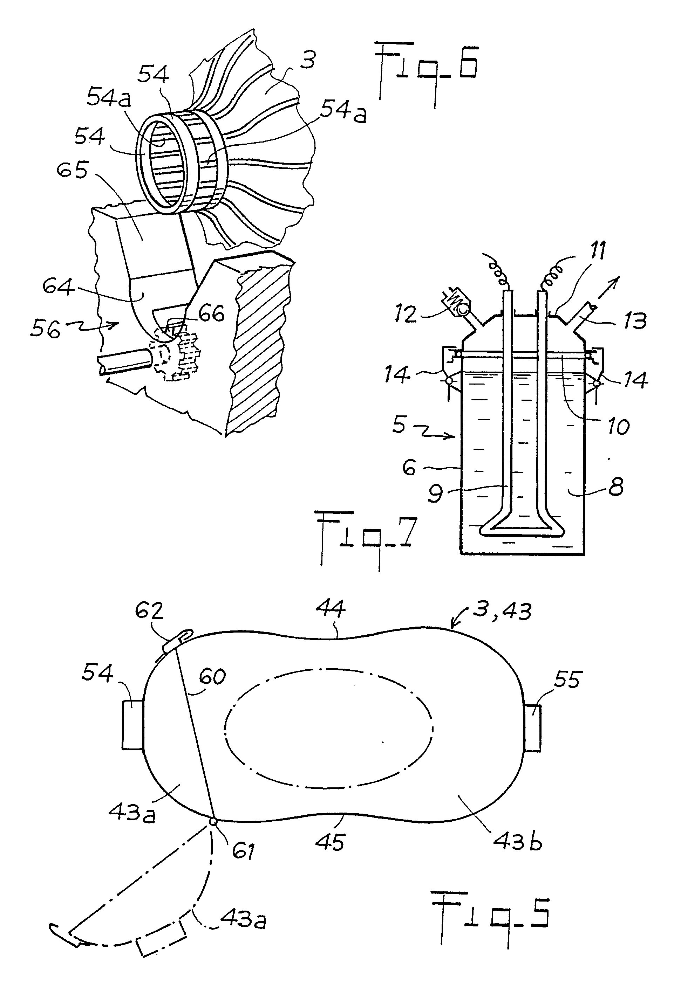

Selon un mode de réalisation particulièrement avantageux, les moyens de production et de distribution de vapeur comprennent (voir aussi figure 7) un générateur de vapeur 6 disposé à l'extérieur de l'enceinte 1 et au moins une rampe de distribution de vapeur 7 prévue à l'intérieur de l'enceinte 1, par exemple derrière et au-dessus du panier de réception 3. Dans ce cas, le générateur de vapeur 6 est constitué, par exemple, d'un réservoir d'eau 8 comportant une résistance électrique en forme de boucle 9 et un orifice de remplissage 10 susceptible d'être obturé au moyen d'un couvercle 11 présentant une soupape de sécurité 12 et un conduit de liaison 13 raccordé à ladite rampe de distribution 7. La résistance électrique en forme de boucle 9 s'étend jusqu'au fond du réservoir 8 et traverse de façon étanche le couvercle 11 qui est fixé de façon étanche et amovible sur le bord supérieur du réservoir d'eau 8, à l'aide d'organes de verrouillage 14.

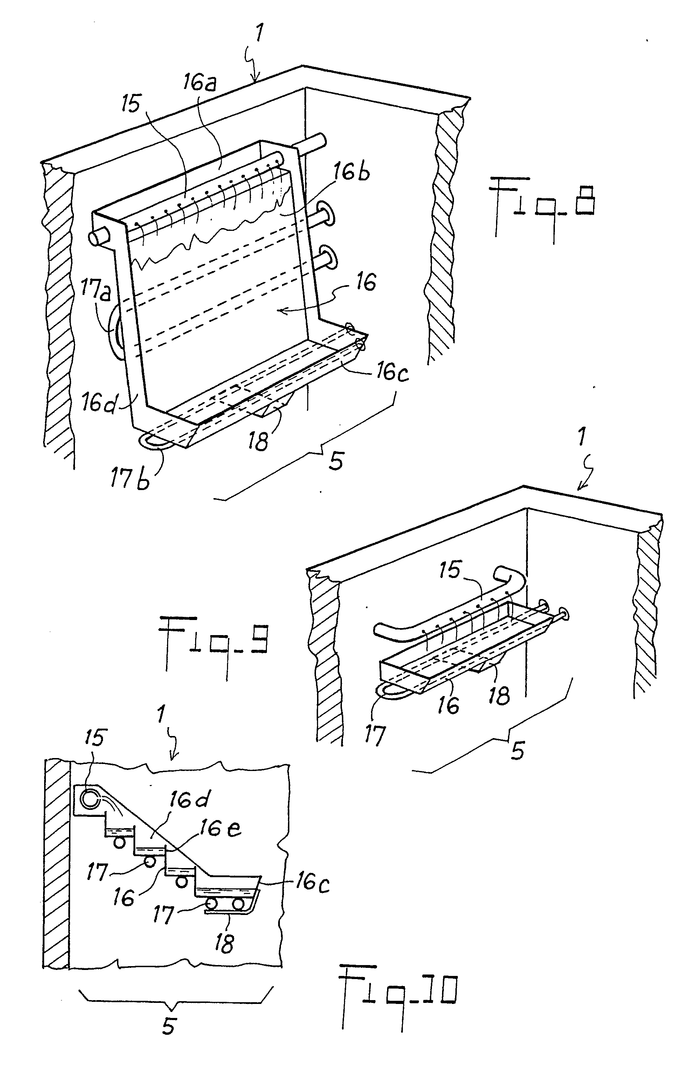

Selon des variantes représentées par les figures 8 à 10, les moyens de production et de distribution de vapeur d'eau 5 comprennent un réservoir d'eau surélevé ou non et muni d'un robinet de réglage du débit d'eau ou d'une pompe de refoulement, au moins une rampe de distribution d'eau 15 raccordée audit réservoir d'eau, au moins une tôle d'évaporation amovible 16 recevant l'eau ruisselant de la dite rampe 15, et au moins une résistance électrique 17, 17a, 17b, 17c, ces différents éléments 15 à 17 étant disposés à l'intérieur de l'enceinte 1.

Le mode de réalisation des moyens de production et de distribution de vapeur d'eau 5 de la figure 8, comprend une tôle d'évaporation 16 qui comporte une partie supérieure 16a formant une demi-auge ouverte vers l'intérieur de l'enceinte 1, une paroi d'écoulement 16b faiblement inclinée par rapport à la verticale et se raccordant au bord intérieur de la demi-auge 16a, ainsi qu'une auge horizontale inférieure 16c dont la paroi arrière se raccorde à l'extrémité inférieure de la paroi d'écoulement 16b, qui est bordée par des joues latérales 16d. La tôle d'évaporation 16 coiffe par les faces latérales de la demi-auge 16a la rampe de distribution d'eau 15 et est ainsi accrochée à cette dernière ; la paroi d'écoulement 16b de la tôle d'évaporation 16 est soutenue contre tout basculement vers l'arrière par une première résistance électrique 17a en forme d'épingle à cheveux et l'auge inférieure 16c repose sur une autre résistance électrique 17b ayant également la forme d'une épingle à cheveux. Le fond de l'auge inférieure 16c est appliqué contre la résistance électrique 17b à l'aide d'au moins un clip élastique 18 solidaire de ladite auge inférieure 16c.

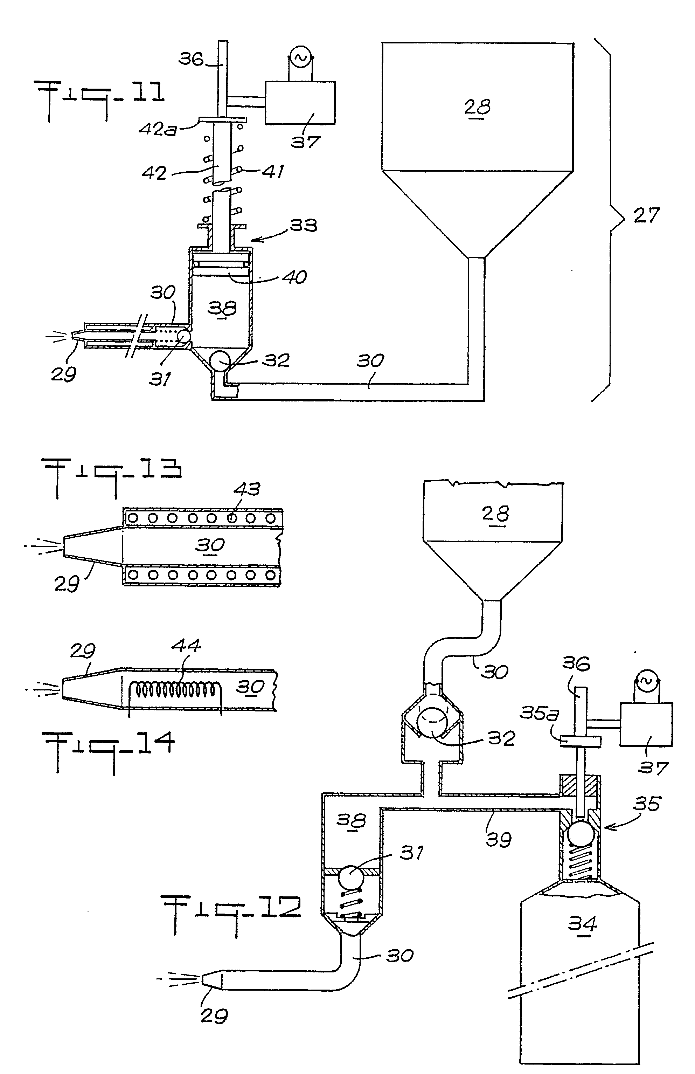

La figure 9 montre un mode de réalisation simplifié des moyens de production et de distribution de vapeur d'eau 5. Dans ce cas, on prévoit une simple rampe de distribution d'eau 15 associée à une auge d'évaporation 16 disposée en dessous de ladite rampe 15 et fixée de façon amovible sur une boucle de résistance électrique 17 au moyen d'un clip élastique 18 solidaire de ladite auge 16.

Les moyens de production et de distribution de vapeur d'eau représentés sur la figure 10 sont d'une structure similaire à celle représentée à la figure 8, à la différence près que, sur la figure 10, la paroi d'écoulement 16b de la tôle d'évaporation 16 est conformée en escalier avec un faible rebord vertical 16e en prolongation de la paroi verticale de chaque marche. Une résistance électrique 17c est disposée en dessous de la paroi horizontale de chaque marche d'escalier. Ainsi l'eau arrivant de la rampe 15 tombe en cascade et s'évapore sur les différentes marches de la tôle d'évaporation et est évaporée rapidement, au plus tard dans l'auge inférieure 16c se raccordant à l'extrémité inférieure de la paroi d'écoulement 16b.

Selon le mode de réalisation représenté sur la figure 1, les moyens de production et de distribution de vapeur d'eau 5 comprennent à la partie inférieure des deux parois latérales opposées l'une à l'autre de l'enceinte 1, deux rangées de buses de pulvérisation d'eau 19, 20 dirigées vers une surface d'évaporation centrale 21 prévue dans la paroi de fond d'un plat-tiroir amovible 22 logé dans le fond de l'enceinte 1 et comprenant une résistance électrique 23 disposée en serpentin sous ladite surface d'évaporation centrale 21, tout en étant au contact de cette surface.

L'alimentation électrique de la résistance électrique 23 est réalisée au moyen de broches 24 situées sur la paroi arrière du tiroir 22 et s'engageant dans des douilles de connexion correspondantes 25 prévues dans la partie inférieure de la paroi de fond de l'enceinte 1.

Cette configuration permet d'extraire ladite surface d'évaporation pour la nettoyer lorsque celle-ci est encrassée notamment par un dépôt excessif de tartre. Bien entendu, ce tiroir peut également servir à recueillir tout liquide tombant du produit à cuire.

Selon un autre mode de réalisation non représenté, les résistances électriques sont incluses dans une plaque de matériau réfractaire définissant ladite surface d'évaporation.

Les buses de pulvérisation d'eau 19, 20 sont adaptées pour projeter une certaine quantité d'eau sur la surface d'évaporation 21 chauffée par la résistance électrique sous-jacente 23 pour produire de la vapeur. Le débit d'eau sera réglé de manière à produire la quantité de vapeur désirée et nécessaire à la précuisson.

Le dispositif de cuisson comporte un filtre 26 établissant une communication entre l'extérieur et l'intérieur de l'enceinte 1 pour éviter des phénomènes de surpression interne dûs à la production de vapeur. Ce filtre 26 est avantageusement disposé dans le couvercle 2.

Selon l'invention, l'étape de précuisson des produits contenus dans la panier 3 s'effectue donc sans apport de matière grasse.

Lorsque l'étape de précuisson ou de cuisson partielle est terminée, on élimine au moins partiellement l'atmosphère gazeuse humide de façon connue, par exemple, par aspiration.

L'étape suivante du procédé de l'invention consiste à recouvrir au moins partiellement les produits précuits avec des particules de matière grasse liquide finement divisée tout en maintenant l'exposition des produits au rayonnement infra-rouge pour réaliser à la fois le grillage superficiel et la cuisson finale à coeur de ces derniers.

Pendant l'opération de grillage superficiel et de cuisson finale, il est avantageux de soumettre les produits à un retournement au moins partiel sur eux-mêmes par rotation du panier grillagé 3 dont les parois possèdent une courbure à la fois dans un plan radial et dans un plan axial comme cela sera encore expliqué en détail.

Les particules de matière grasse liquide finement divisée sont déposées sur les produits précuits de préférence par pulvérisations successives de courte durée, les intervalles entre deux pulvérisations successives correspondant au moins à un retournement partiel des produits sur eux-mêmes. Dans certains cas, il peut être avantageux de préchauffer la matière grasse liquide avant de la pulvériser sur les produits précuits.

Les moyens de distribution 27 de matière grasse liquide finement divisée comprennent un réservoir de matière grasse 28 disposé à l'extérieur de l'enceinte 1, et au moins une buse de pulvérisation 29 passant de façon étanche à travers une paroi latérale de l'enceinte 1, débouchant à l'intérieur du panier 3 et raccordée au moyen d'une conduite d'alimentation 30 et de soupapes de retenue 31, 32, d'une part, au réservoir 28 et, d'autre part, à une pompe de refoulement 33 ou moyen similaire, lorsque le réservoir 28 lui-même n'est pas du type à gaz propulseur.

Selon un mode de réalisation particulièrement avantageux, le réservoir 28 contient la matière grasse sous pression et est réalisé par exemple sous forme d'une bombe aérosol (figure 1) ou est associé à une cartouche d'air comprimé 34 qui comporte une soupape à aiguille 35 dont la tête d'aiguille 35a située à l'extérieur du réservoir de type bombe aérosol 28 ou de la cartouche d'air comprimé 34 est actionnée périodiquement par un excentrique 36 monté sur l'arbre de sortie d'un moteur, par exemple du type pas à pas programmable 37.

Selon le mode de réalisation représenté sur la figure 12, une chambre de dosage 38 est interposée dans la conduite 30 entre le réservoir non pressurisé et la buse 29, et comporte la soupape de retenue 31 ouvrant en direction de la buse 29 sous l'action de l'air comprimé libéré de la cartouche 34 et la soupape de retenue 32 disposée à la sortie du réservoir 28 empêche le refoulement de l'air comprimé vers le réservoir 28. On notera que la conduite de sortie 39 de la cartouche 34 débouche directement dans la partie supérieure de la chambre de dosage 38 en aval de la soupape de retenue 32.

Un autre mode de réalisation des moyens de distribution de la matière grasse liquide (voir figure 11) procède à la mise sous pression d'une certaine quantité de matière grasse à l'intérieur de la chambre de dosage 38 au moyen d'une pompe mécanique de refoulement 33. Dans ce cas, le piston doseur 40 de la pompe 33 se déplaçant dans la chambre de dosage 38 dont la sortie comporte la soupape 31 et l'entrée, la soupape 22, est commandé dans le sens ascendant par un ressort de rappel 41 agissant en permanence sur un épaulement supérieur 42a de la tige de piston 42 et, dans lesens descendant entraînant le refoulement du liquide vers la buse 29, par l'excentrique 36 solidaire de l'arbre de sortie du moteur 37.

Le préchauffage de la matière grasse est réalisé, par exemple, par chauffage de la conduite d'alimentation 30 reliant le réservoir 28 à la buse de pulvérisation 29. Si les résistances de chauffage 43 ou 44 sont disposées à l'extérieur (figure 13) ou à l'intérieur (figure 14) de la conduite d'alimentation 30 entre la buse 29 et la chambre de dosage 38, seule la quantité dosée de matière grasse qui est destinée à une pulvérisation immédiate est préchauffée.

Le panier ajouré 3 destiné à recevoir les produits pendant leur traitement à l'intérieur de l'enceinte 1 présente la forme d'un tambour rotatif similaire à un ellipsoïde de révolution autour du grand axe horizontal dont la paroi périphérique 43 plus ou moins finement grillagée selon les dimensions des produits à traiter comprend au moins une paire de zones médianes symétriques 44, 45 enfoncées en direction du grand axe qui constitue en même temps l'axe de rotation du panier 3. Dans l'exemple représenté sur les figures 2 et 3, le panier 3 comporte une paire de zones médianes enfoncées supplémentaires 44a, 45a, de sorte que la coupe transversale passant par le centre du panier 3, présente une forme similaire à un trèfle à quatre feuilles. Bien entendu, en l'absence de la paire supplémentaire de zones médianes enfoncées 44a, 45a, la coupe médiane du panier comporterait deux zones médianes enfoncées 44, 45, c'est-à-dire concaves (vu de l'extérieur du panier 3) raccordées entre elles -dans le sens périphérique- par des zones médianes convexes 46, 47 (voir figure 3 ; traits en tirets). Tel que représenté sur les figures 2 et 3, le panier 3 présente dans sa partie médiane quate zones enfoncées 44, 45, 44a, 45a et quatre zones non enfoncées 48, 49, 50, 51, une zone non enfoncée étant prévue entre deux zones enfoncées. Ainsi, vu de l'intérieur du panier 3, une zone convexe, par exemple 44, alterne avec une zone concave, par exemple 48 à chaque quart de tour du panier 3. Comme on peut le voir également sur les figures 2 et 3, les zones enfoncées se raccordent progressivement aux parties extrêmes du panier 3 qui présentent alors des sections transversales circulaires à partir de la section 52 ou 53.

A chacune de ses extrémités latérales, le panier 3 se rétrécit et présente un pivot 54, 55 coaxial à l'autre et reçu directement ou indirectement dans ou sur un palier correspondant 56, 57 fixé ou prévu sur l'une ou l'autre des parois latérales de l'enceinte 1. Au moins l'un (55) des deux pivots 54, 55 est de forme annulaire ou tubulaire, coiffe un palier tubulaire 57, et délimite un accès latéral et axial à l'intérieur du panier 3. En outre, au moins l'un, (par exemple 54) des pivots 54, 55 est muni d'une partie mâle 58a des moyens d'accouplement 58 dont la partie femelle 58b et un ressort intermédiaire 58c sont portés par l'arbre de sortie 59a d'un mécanisme d'entraînement rotatif 59 comprenant un moteur prévu à l'extérieur de l'enceinte 1, l'arbre 59a étant monté dans le palier 56.

La jonction entre la surface périphérique 43 et les extrémités latérales du panier 3 est arrondie et éventuellement renforcée.

Comme précédemment mentionné dans au moins deux secteurs angulaires d'au plus 90°, symétriquement opposés, les génératrices du panier 3 sont incurvées en direction de l'axe et dans deux autres secteurs, les génératrices sont incurvées vers l'extérieur, la longueur de la zone incurvée vers l'axe du panier 3 étant comprise entre un tiers et deux tiers de la longueur totale dudit panier.

Ainsi, vu de l'intérieur, au niveau de la partie centrale, le panier 3 présente alternativement des zones concaves et des zones convexes de sorte que pendant sa rotation les produits s'approchent puis s'éloignent de l'axe tout en étant retournés par roulement sur eux-mêmes.

Le panier 3 comporte également une ouverture d'accès 60 obturable qui est prévu soit sur la surface périphérique 43, soit sur une extrémité latérale. Dans ce dernier cas, l'ouverture 60 est de préférence formée par une découpe en biais sur tout le pourtour de la paroi périphérique 43 du panier 3 près de l'une de ses extrémités latérales, la partie découpée 43a formant un couvercle rabattable articulé par une charnière 61 sur le corps restant 43b du panier 3 et fixé sur ce dernier par des organes de verrouillage 62.

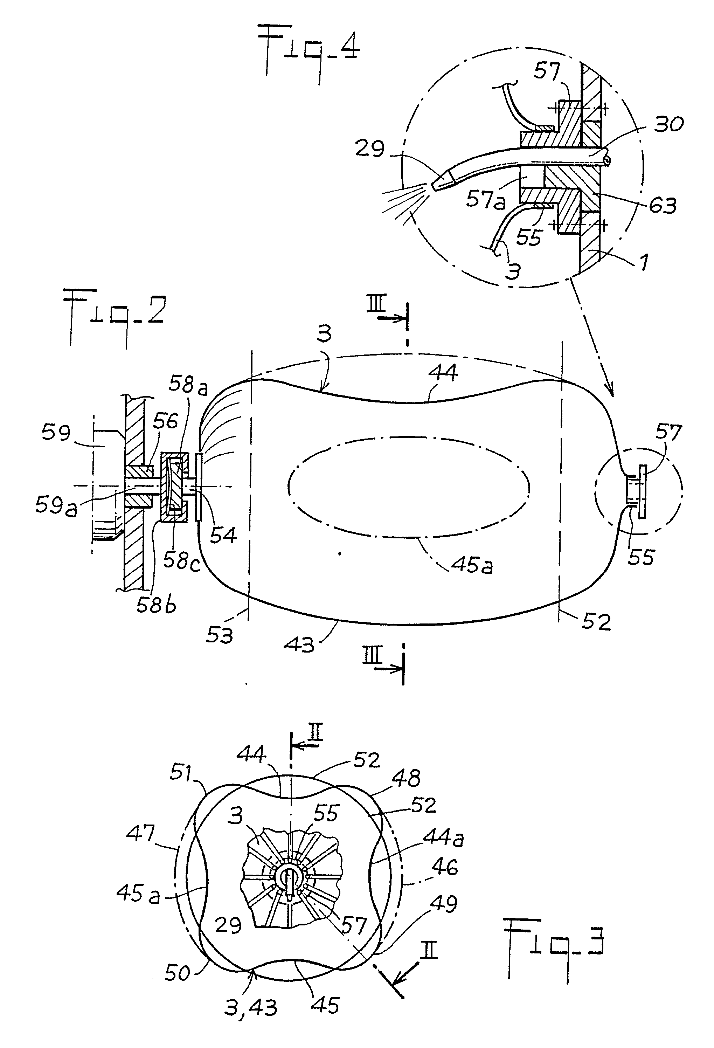

Les paliers de support 56, 57 du panier 3 sont montés sur les parois latérales de l'enceinte 1 et font saillie vers l'intérieur de celle-ci. Ces paliers 56, 57 sont, dans leur forme, adaptés aux pivots 54, 55 du panier 3 de telle sorte que ledit panier 3 puisse facilement être monté dans ou sorti de l'enceinte 1. Le palier annulaire 57 situé du côté de la buse de pulvérisation 29 a un diamètre intérieur suffisant pour permettre le passage de la buse 29, même lorsque celle-ci est légèrement incurvée vers le bas. La partie rectiligne s'applique de préférence contre la face interne de l'ouverture centrale 57a du palier annulaire 57 et l'espace restant dans cette ouverture 57a est obturée par un bouchon 63 (voir figure 4).

Selon un mode de réalisation particulièrement avantageux (voir figure 6), les paliers de support 56, 57 sont réalisés sous forme de berceaux 64 ouverts vers le haut, délimités par des surfaces de guidage obliques 65, et adaptés pour recevoir les pivots annulaires 54, 55 du panier 3. Dans ce mode de réalisation, au moins l'un (56) des deux paliers en berceau 56, 57 comporte une roue dentée motorisée 66, affleurante à la surface du fond du palier de support 56 et destinée à coopérer avec les barreaux 54a du pivot 54 correspondant du panier 3.

Comme précédemment mentionné, l'accouplement à l'arbre de sortie 59a d'un mécanisme d'entraînement 59 peut également être réalisé au moyen d'une partie femelle 58b adaptée pour recevoir de façon amovible une partie mâle élargie 58a solidaire de l'un des pivots latéraux du panier 3. Le pivot 54 est maintenu sous pression à l'intérieur de la partie femelle 58b au moyen d'une lame ressort 58c à face bombée.

Le procédé de l'invention s'applique aussi bien à des produits précuits qui doivent être frits, grillés ou dorés avant leur consommation, qu'à des produits crus, congelés ou surgelés en adaptant le programme de fonctionnement du dispositif pour obtenir une précuisson , une cuisson partielle ou une décongélation avant le grillage superficiel et la cuisson à coeur.

Les matières grasses utilisées sont de préférence celles qui sont liquides à température ambiante comme par exemple l'huile alimentaire. Mais on peut avoir aussi recours à des matières grasses qui sont encore solides autour de 20°C mais qui fondent à des températures inférieures à 50° C.


**Revendications**

1. Procédé de cuisson automatique de produits alimentaires comprenant successivement la précuisson desdits produits, leur grillage en surface, puis leur cuisson à coeur, lesdits produits étant contenus dans un panier ajouré (3), au moins pendant leur cuisson finale,
caractérisé en ce qu'on réalise la précuisson en atmosphère gazeuse au moins partiellement humide sous l'action concomittante d'un rayonnement infra-rouge, on élimine ensuite au moins partiellement l'atmosphère gazeuse humide, puis on recouvre au moins partiellement les produits précuits avec des particules de matière grasse liquid finement divisée et on maintient le rayonnement infra-rouge pour réaliser à la fois le grillage superficiel et la cuisson finale à coeur desdits produits et en ce que au moins pendant la cuisson finale, on soumet lesdits produits à des mouvements de retournement au moins partiel sur eux-mêmes par rotation dudit panier (3) autour de son axe et que la paroi périphérique (43) possède la forme d'un ellipsoïde de révolution autour du grand axe horizontal, cette paroi périphérique ellipsoïdale comportant au moins une paire de zones médianes symétriques (44, 45, 44a, 45a) enfoncées en direction du grand axe.

2. Procédé selon la revendication 1, caractérisé en ce qu'on préchauffe les produits précuits au moins partiellement et, de manière discontinue, avec des particules de matières grasse liquid finement divisée.

3. Procédé selon l'une des revendications 1 ou 2, caractérisé en ce que lesdites particules de matière grasse liquid finement divisée sont déposées sur les produits précuits par pulvérisations successives de courte durée, les intervalles entre deux pulvérisations successives correspondant à au moins un retournement partiel des produits sur eux-mêmes.

4. Procédé selon l'une des revendications précédentes, caractérisé en ce que l'on préchauffe une quantité dosée de matière grasse immédiatement avant de la pulvériser.

5. Procédé selon l'une des revendications précédentes, caractérisé en ce que l'atmosphère gazeuse humide est constituée au moins partiellement de vapeur d'eau.

6. Procédé selon l'une des revendications précédentes caractérisé en ce que ladite atmosphère est tranquille

7. Procédé selon l'une des revendications 1 à , caractérisé en ce que ladite atmosphère est à circulation forcée en circuit fermé.

8. Dispositif de cuisson automatique de produits alimentaires comprenant :
- une enceinte de chauffage (1) ayant une ouverture obturable par un couvercle (2) ou porte,
- un panier ajouré amovible (3) disposé à l'intérieur de l'enceinte (1) et destiné à contenir lesdits produits, et
- des résistances électriques (4) à rayonnement infra-rouge,
caractérisé en ce que ledit panier (3) est un tambour rotatif dont la paroi périphérique (43) présente la forme d'un ellipsoïde de révolution autour du grand axe horizontal comprenant au moins une paire de zones médianes symétriques (44, 45, 44a, 45a) enfoncées en direction du grand axe, et dont chacune des extrémités latérales est munie d'un pivot coaxial (54, 55) à l'autre reçu chacun dans un palier (56, 57) fixé sur une face intérieure de l'enceinte, qu'au moins l'un (55) des deux pivots (54, 55) est de forme annulaire et délimite un accès latéral et axial à l'intérieur du panier (3) et au moins l'un des deux pivots (54, 55) est muni de moyens d'accouplement (58) à un mécanisme d'entraînement rotatif (59) comportant un moteur dont au moins l'arbre de sortie (59a) pénètre à l'intérieur de l'enceinte (1), et en ce qu il comporte en outre
- des moyens de production et de distribution de vapeur (5) dont au moins une partie est prévue à l'intérieur de l'enceinte (1),
- un filtre (26) établissant une communication entre l'extérieur et l'intérieur de l'enceinte (1),
- des moyens de distribution (27) de matière grasse liquide finement divisée dont au moins une partie débouche à l'intérieur du panier (3) à travers le pivot annulaire (55) , et
- des moyens de contrôle et de commande de la distribution de vapeur et de matière grasse prévus à l'extérieur de l'enceinte (1).

9. Procédé selon la revendication 8, caractérisé en ce que les moyens de production et de distribution de vapeur (5) comprennent au moins une rampe de distribution d'eau (15), au moins une paroi d'évaporation amovible (16) et au moins une résistance électrique (17, 17a, 17b, 17c) disposée de façon sensiblement horizontale à l'intérieur de l'enceinte(1) en étant au contact de la face arrière de ladite paroi d'évaporation.

10. Procédé selon la revendication 8, caractérisé en ce que lesdits moyens de production et de distribution de vapeur (5) comprennent un générateur de vapeur (6) disposé à l'extérieur de l'enceinte (1) et au moins une rampe de distribution de vapeur (7), interne à l'enceinte (1).

11. Procédé selon la revendication 8, caractérisé en ce que les moyens de distribution (27) de matière grasse liquide finement divisée comprennent un réservoir de matière grasse (28) disposé à l'extérieur de l'enceinte (1), au moins une buse de pulvérisation (29) débouchant à l'intérieur du panier (3) à travers le pivot annulaire et au moins un moyen de mise sous pression (33, 34) d'une quantité dosée de matière grasse pour l'expulser à travers ladite buse de pulvérisation (29).

12. Procédé selon l'une des revendications 7 à 11, caractérisé en ce que le panier (3) comporte une ouverture d'accès obturable.

13. Procédé selon l'une des revendications 7 à 12, caractérisé en ce que le dispositif comprend également des moyens de récupération des liquides résultant de la cuisson constitués d'un plat-tiroir amovible (22) monté de façon coulissante dans la partie inférieure de l'enceinte de chauffage (1).

# Fig_1

EP 0 396 470 A1

*Fig.4*

*Fig.2*

*Fig.3*

Fig_6

Fig_7

Fig_5

Fig.8

Fig.9

Fig.10

Fig-11

Fig-13

Fig-14

Fig-12

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A | EP-A-168359 (A. CAVALLI)<br>* page 4, ligne 23 - page 6, ligne 11; figures 2, 3 *<br>--- | 1, 4, 8, 11, 13 | A21B5/08<br>A47J37/04<br>A47J37/12<br>A21B3/04 |
| A | WO-A-8706445 (P.M. VOS ET AL)<br>* abrégé; figures 11, 12 *<br>--- | 1 | |
| A | US-A-4646630 (J.M. MCCOY ET AL)<br>* abrégé; figures 2, 3 *<br>--- | 9 | |
| A | FR-A-2413035 (M SCHEYEN)<br>* revendications 1, 2; figure 2 *<br>--- | 10 | |
| A | FR-A-2222951 (BAKER PERKINS INC.)<br>--- | | |
| A | US-A-3807292 (J. DEPRIMUS CINTER)<br>--- | | |
| A | GB-A-2082447 (J. MCGINTY)<br>--- | | |
| A | FR-A-2398461 (THE PILLSBURY CO.)<br>----- | | |

**DOMAINES TECHNIQUES RECHERCHES (Int. Cl.5 )**

A21B
A47J

Le présent rapport a été établi pour toutes les revendications

| Lieu de la recherche | Date d'achèvement de la recherche | Examinateur |
|---|---|---|
| LA HAYE | 11 JUILLET 1990 | FRANKS N.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P0402)